# EUROPEAN PATENT SPECIFICATION

(11) **EP 0 703 153 B1**
(45) Date of publication and mention of the grant of the patent: **03.01.2001**
(21) Application number: 95202539.3
(22) Date of filing: 20.09.1995
(51) Int. Cl.: B65D 1/04, B65D 1/02, B29C 49/00, B29C 49/12, B29C 49/48, B29C 49/06, B29C 45/26, G01F 11/28

(54) **Multi-chamber container**
Mehrkammerbehälter
Récipient à plusieurs compartiments

(30) Priority: 21.09.1994 US 310557; 15.11.1994 US 339940
(43) Date of publication of application: 27.03.1996
(73) Proprietor: Colgate-Palmolive Company, New York, N.Y. 10022-7499 (US)
(72) Inventor: Deardurff, Lawrence R., Waterville, Ohio (US); Durham, Daniel J., Toledo, Ohio (US); Sherman, Adam, Brooklyn, New York (US); Del'Re, Salvatore N., Marlboro, New Jersey (US); McKinney, James C., Cranbury, New Jersey (US); Semersky, Frank E., Toledo, Ohio (US)
(74) Representative: Smulders, Theodorus A.H.J., Ir.

(56) References cited:
- WO-A-90/05674
- US-A- 4 070 140
- US-A- 5 024 340
- US-A- 5 232 108
- PATENT ABSTRACTS OF JAPAN vol. 016, no. 021 (M-1201), 20 January 1992 & JP-A-03 236932 (YOSHIDA KOGYO KK), 22 October 1991,

## Description

This invention relates to blow molded multi-chamber dispensing containers, the methods for blow molding multi-chamber dispensing containers, and molds for use in making preforms and for blow molding multi-chamber dispensing containers. More particularly this invention relates to multi-chamber containers which have an elliptical cross-section and where in dispensing the substances are kept separate through the point of flowing into a receptacle.

### BACKGROUND OF THE INVENTION

Multi-chamber containers are of two general types. A first type is where the chambers are separate containers which then are interfitted together or held together with a shrink band. A multi-chamber container of this type is disclosed in U.S. Patent 5,158,191. This patent shows two bottles held together with an interfitting arrangement. Whether the bottles are interfitted together or held together with a shrink band there is a lack of stability. There always will be some inter-container movement. A preferred container is one that has multiple chambers as a part of its basic structure. The most effective way to make such containers is by blow molding. However, it is difficult to produce multi-chambered containers by blow molding. Techniques for blow molding multi-chamber containers are disclosed in Japanese Application No. 11430/1968, as well as in U.S. Patent 5,232,108 and U.S. Patent 5,242,066. Japanese Application No. 11430/1968 discloses injection molding a preform having a center wall and then blowing this preform to a container with two compartments. This container can be round or elliptical. U.S. Patent 5,232,108 discloses a round multi-chamber container which has been blown from a preform that has multiple chambers. This patent discloses a technique for maintaining the integrity of the center wall during the blow molding phase. U.S. Patent 5,242,066 discloses plastic bottles that have internal reinforcing spiders or webs. The objective in this patent is to reinforce the wall of a bottle that is to contain a carbonated beverage. These spiders or webs usually will not extend fully from the bottom of the bottle to the bottle exit since there is no need to keep the liquid portions separate. The liquid throughout the bottle is the same.

The preferred multi-chamber container is one that is made in one piece and that is of an integral structure. The container costs less to make and to fill. It also has more structural integrity. However, it is difficult to blow mold multi-chamber container which includes an integral dispensing arrangement where the fluids from each chamber of the containers do not mix until flowed from the container into a receptacle.

Attempts have been made to overcome the problems of the prior art and discloses multi-chamber dispensing and dosing containers that are of an integral structure. Such containers may be blow-molded from an injected perform and assembly only including the insertion of delivery dip tube fitments and providing a closure. This multi-chamber container is easily filled and has full structural integrity during storage, handling and use.

US 4 070 140 discloses a plastic blow molded multi-chamber container with a separating wall extending between the bottom and the upper end. The bottom of the container is provided with an indentation that is shaped frusto conically. The top of the frusto conical indentation forms a large flat central portion of the bottom. The central portion of the bottom is surrounded by a relatively small, substantially V-shaped peripheral portion. The peripheral portion forms a rigid standing edge for the container. The sidewall of the container is provided with V-shaped grooves extending along the juncture of the sidewall and the web. These grooves intersect with the bottom to form notches in the peripheral portion thereof, coincidentally dividing the rigid standing edge into two "footed" portions.

However, it has been found that due to the inherent structure should much multi-chambered containers drop and impact a surface, failures may occur. The failures include lifting and separation of the dividing web at the juncture thereof with the base of the container. Upon impact, the stiff V-shaped standing ridge of the container according to US 070 140 can hardly deform. Instead, the sidewalls of the footed portions adjacent to the notches conduct the majority of the impact force towards and into the dividing web, thus damaging the juncture of the bottom and the dividing web. In particular, damage of the juncture of the dividing web and the bottom will occur at the intersection of the notches and the flat central portion of the bottom.

### BRIEF SUMMARY OF THE INVENTION

The present invention is directed to multi-chamber dispensing and dosing containers which are of an integral one-piece construction. The multi-chamber container is blow molded having separate multiple chambers which are separate from the base of the container through the dispensing and dosing section. The container is preferably elliptical and the webs which form the chamber dividing walls have a decreased thickness in the central region of the web. The dispensing and dosing arrangement is an integral part of the container structure with the dosing and dispensing portion being divided into separate chambers, the same as in the container. The webs that form the separating walls in the container are continued into and throughout the dispenser/doser region to maintain the chambers separate throughout the container and dispenser/doser.

The chamber forming web must flex when the bottle side walls are compressed. This flexing will be at a center region of each web where it is at its decreased thickness.

Also, the container has a base which is formed to protect the dividing web from lifting in the region of the juncture between the web and the base.

Further, the container has a petaloid base configuration including energy absorbing feet adjacent the juncture of a dividing web and the base. A high impact strength base of the container is achieved by the base comprising a generally outwardly convex bottom wall having an axial inwardly arched lineal impression the under surface of which forms a juncture web the bottom-most edge of the internal web dividing the interior of the container into separate chambers, and at least a pair of outwardly extending footed portions providing compact support for the container.

There is a dip tube for each chamber. The lower end of each dip tube is irregular, and preferably V-shaped.

The preform to produce the multi-chamber containers will have a web structure that is to be the web structure of the multi-chamber bottle. The preform is injection molded. The mold core is comprised of three sections for increased stability. There is the core base section and two core projections. The base section holds the core projections that form the multiple chambers. At a lower end of the core projections there preferably are recesses to enhance the flow of plastic with a complementary gate pad. The gate pad of the injection mold is of an elongated shape to further enhance the flow of plastic and to prevent core projection deflection during molding.

It is preferred that the container and consequently the blow mold have vertically oriented discontinuities in order to promote the expansion during preform blowing only in a vertical and a horizontal direction with no angular movement of the plastic during blowing. This will maintain the chamber web walls in a vertical orientation.

### BRIEF DESCRIPTION OF THE DRAWINGS

Figure 1 is a front and rear elevational view of a container embodying the features of the invention illustrating a two-footed support therefore;
Figure 2 is a left and right side elevational view thereof;
Figure 3 is a sectional view taken along line 3-3 of Figure 1;
Figure 4 is a bottom plan view of the embodiment illustrated in Figures 1, 2 and 3;
Figure 5 is a front and rear elevational view of a container embodying the features of the invention illustrating a four-footed support therefore;
Figure 6 is a left and right side elevational view of the embodiment illustrated in Figure 5;
Figure 7 is a sectional view taken along line 7-7 of Figure 5;
Figure 8 is a bottom plan view thereof; and
Figure 9 is a sectional view taken along line 9-9 of Figure 7.
Figure 10 is an elevational view of a container with a closure, but not in line with the claims.
Figure 11 is a horizontal sectional view of the container of Figure 10 without the closure.
Figure 12 is an elevational view of the dispenser/doser parts of the container of Figure 11 showing side delivery from the dip tubes.
Figure 13 is an elevational view of the dispenser/doser part of the container of Figure 12 rotated 90 degrees.
Figure 14 is a top plan view of the container of Figure 11.
Figure 15 is an elevational view of the container preform.
Figure 16 is an elevational view of the preform of Figure 15 in a horizontal section.
Figure 17 is a top plan view of the preform of Figure 15.
Figure 18 is an elevational view of the core of the mold for the preform.
Figure 19 is an elevational view in section of the injection mold for making preforms.
Figure 20 is a bottom view of the injection mold of Figure 19 with an elongated gate pad.
Figure 21 is an inner surface of a blow mold showing recesses and projections to promote a vertical downward flow of plastic during blow molding.

### DESCRIPTION OF THE PREFERRED EMBODIMENTS

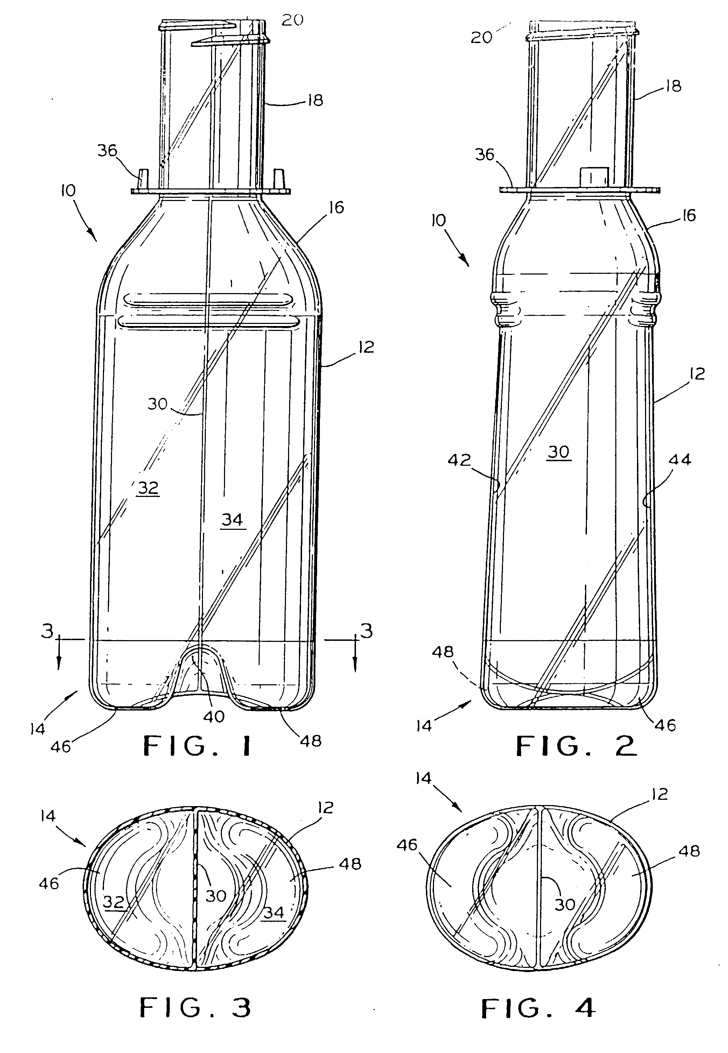

With reference to the embodiment illustrated in Figures 1 through 4, there is shown a container 10 having a sidewall 12, a base 14, a sidewall shoulder 16, a neck portion 18, and an aperture 20.

A web 30 is disposed within the interior of the container 10 and is adapted to extend upwardly from the base 14 traversing the sidewall 12, the sidewall shoulder 16, the neck 18 and terminates at the aperture 20. The web 30 effectively divides the interior of the container 10 into two discrete chambers 32 and 34.

The upper end of the container 10 is provided with a locking ring 36 and typically will include a suitable closure, not shown, to cooperate with the locking ring 36 to effectively close the container 10.

The base 14 is generally outwardly convex in shape and is provided with an axial inwardly arched lineal impression 40, the inner surface of which forms a juncture with the bottom-most edge of the internal web 30. It will be readily apparent that the opposing side edges 42 and 44 are integrally joined with the inner surface of the sidewall 12, the sidewall shoulder 16, and the neck portion 18. The interior of the container 10 is thereby formed into the chambers 32 and 34 and separately communicate with the exterior of the container 10 through the aperture 20.

On opposite sides of the lineal impression 40 there is formed a pair of opposed outwardly extending petaloid footed portions 46 and 48. The footed portions 46 and 48 normally provide support for the container 10 and further provide impact protection for the lineal juncture between the bottom-most edge of the central web 30 and the base 14.

It will be appreciated should the container 10 filled with separate liquids, for example, be accidentally allowed to drop on a hard surface, the footed portions 46 and 48 will function to protect the juncture of the web 30 and the base 14 from direct impact and the possible resultant lifting and separation of the edge of the web 30 from the base 14 which would allow the otherwise discrete liquids to mix.

Further, it will be understood favorable results have been achieved by forming the container 10 of polyethylene terephthalate (PET), for example. Such plastic material may be formulated to allow the plastic material which defines the footed portions 46 and 48 to absorb impact energy at a given rate to prevent any lifting of the central web 30 from the base 14.

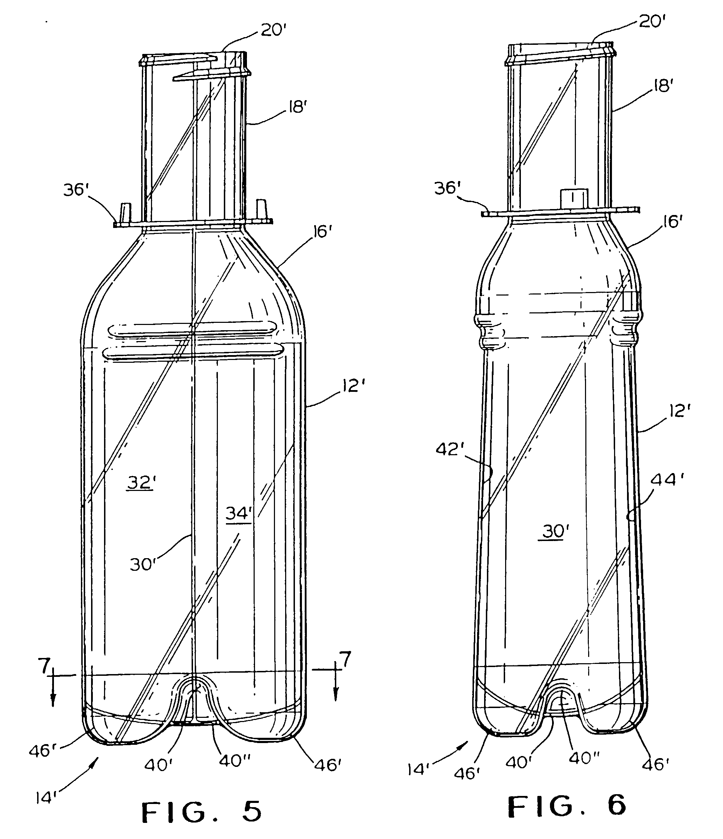

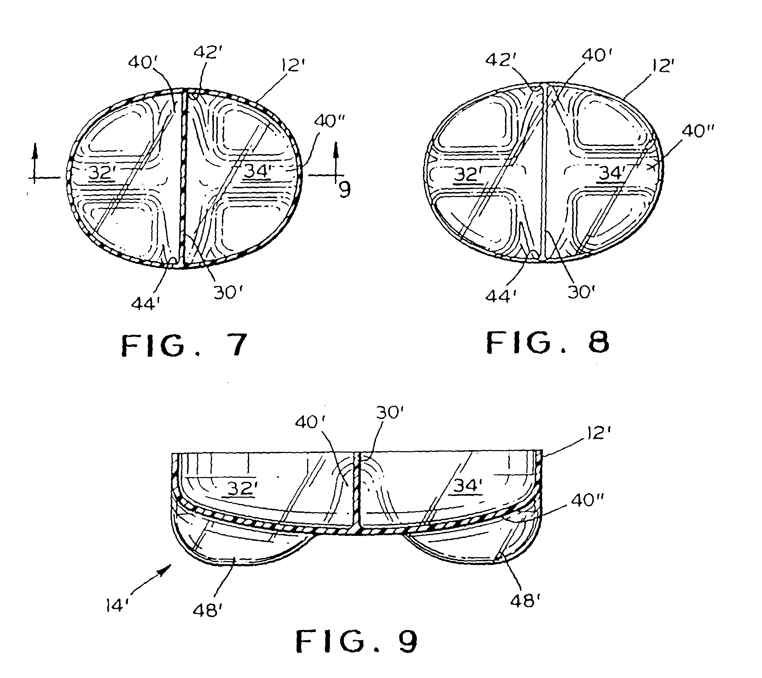

Another embodiment of the invention is illustrated in Figures 5 through 9. The embodiment is very similar to the embodiment of the invention illustrated in Figures 1 through 4 and primed references are used to illustrate structural elements which are the same as those illustrated in Figures 5 through 9. The container 10' has a base 14' which is generally outwardly convex in shape similar to the earlier described embodiment but is provided with a petaloid configuration having a four-footed support rather than the two-footed support described hereinbefore.

More specfically, the base 14' of the container 10' is provided with an axial inwardly arched lineal impression 40' and a generally laterally disposed axial inwardly arched lineal impression 40". The resultant base structure includes spaced apart footed portions 46' and 48' disposed on opposite sides of the impression 40', and spaced apart footed portions 50 and 52 disposed on opposite sides of the impression 40". It has been found that under certain circumstances, the four-footed structure of Figures 5 through 9 has additional inherent stability and resistance to tipping.

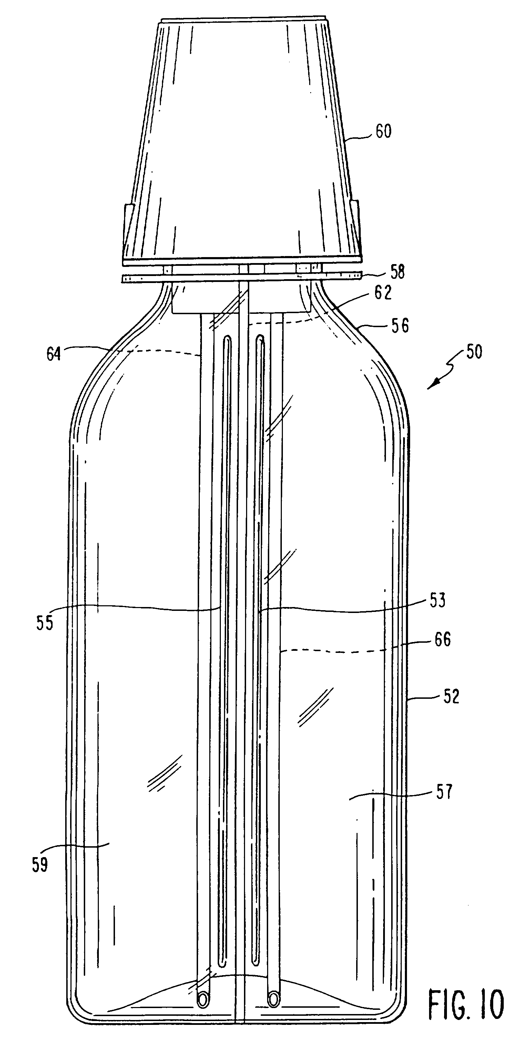

Another embodiment is shown in Figure 10. Container 50 has sidewall 52, base 54 and sidewall shoulder area 56. Within the container is web 62 which separates the container into two chambers. The web has a minimum thickness in the central region, that is, a region equidistant from the sidewalls. This will be a thickness of less than about 0.4 mmd, and preferably less than 0.2 mm. Each chamber has a dip tube 54, 56 extending from the sidewall shoulder to near the base. On the surface of the bottle is a vertical projection 55 and a vertical recess 53. These are ornamental in the end product bottle but are used to stabilize the plastic material distribution after contact with the mold during blow molding. At the upper end of the bottle is locking ring 58 and closure 60.

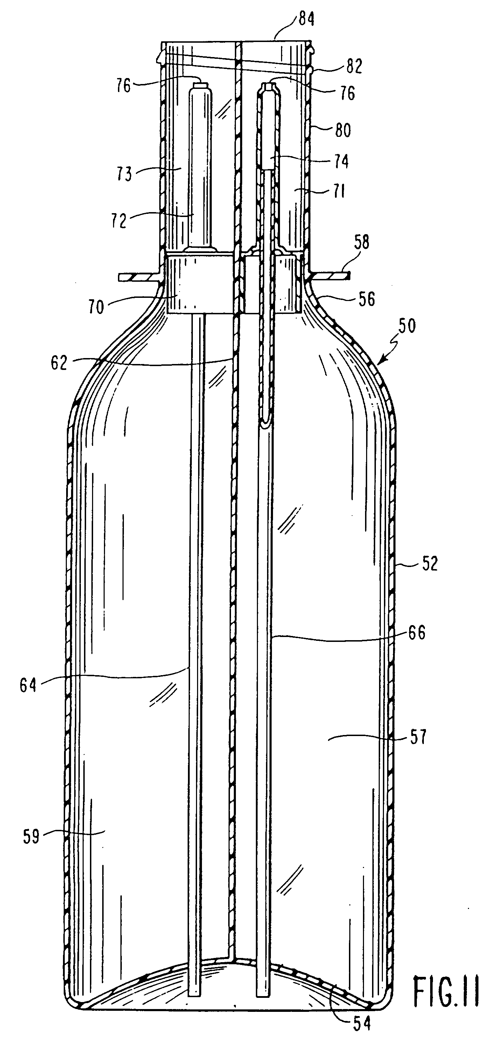

This bottle is shown in cross-section and without the closure in Figure 11. It is shown that each of dip tubes 54 and 56 are connected into fitments 70 which also seal upper dispensing/doser chambers 71, 73 from the lower containment 72 and 74. Each of these dip tube extensions has an opening 76. The dispensing/doser chambers are formed by web 62 and wall 80. The exit of the dispenser/doser section in aperture 84. Threads 82 attach the closure to the container. The web 62 extends from the base of the bottle to the dispenser/doser exit 84.

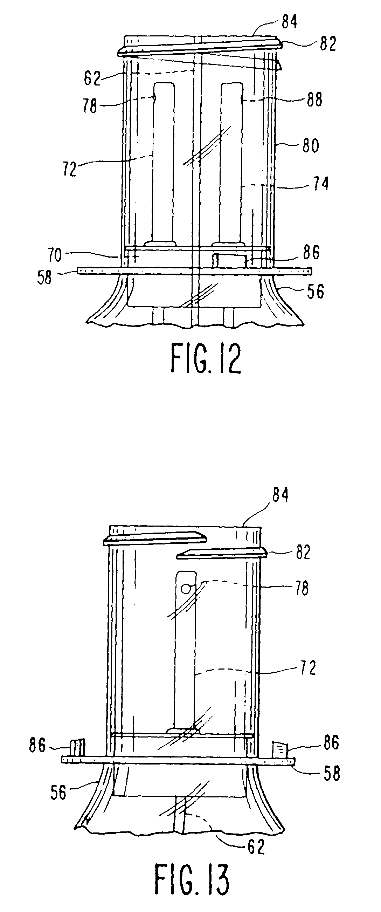

Figure 12 shows the top dispensing/doser section of the container. In this embodiment dip tube extensions 72 and 74 have side openings 78 for dispensing product. Lugs 86 (see also Figure 13) are locking lugs that are used to hold the closure securely in place. In Figure 13 the discharge openings 78 are shown in more detail.

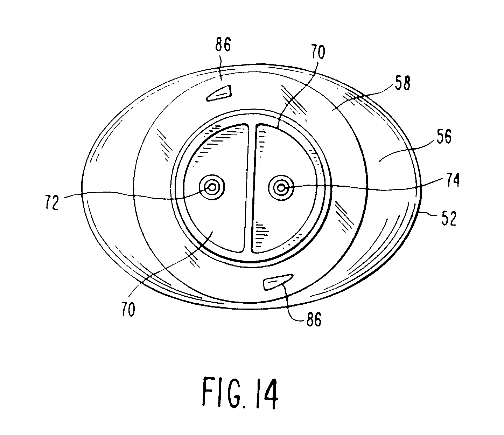

Figure 14 is a top plan view of the container showing the D-shaped fitments 70 that hold the dip tube extensions and also which seal the dip tubes in the shoulder of bottle 50.

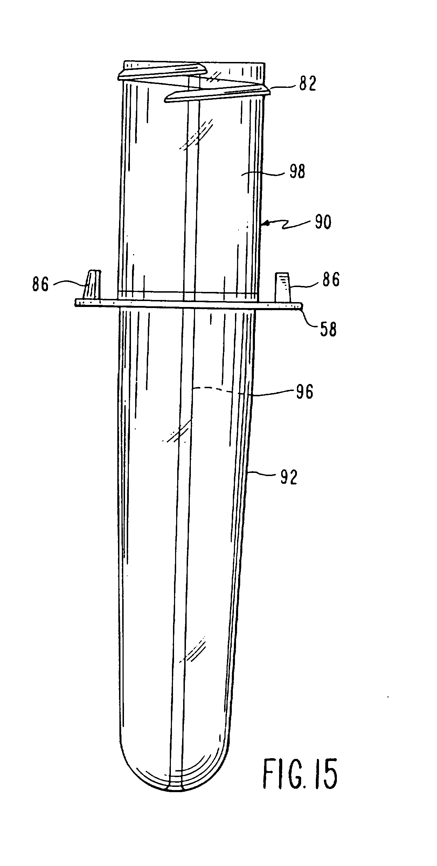

Figure 15 discloses a preform for making the container of Figure 10. This preform consists of a plastic tube 90 having a sidewall 92 and an inner wall 96. Wall 98 will be the outer wall of the dispenser/doser and of the blown container. In blowing the container the lugs 86 or the inner wall 96 can be used to align the preform in the mold. Alignment is important. For an elliptical bottle the blow mold will be elliptical in shape. The preform will be placed in the mold in different orientations to produce a blow bottle with a web along the major axis, along the minor axis or at an angle to the major axis or minor axis. Since in injection molding the preform the lugs 86 and the center wall 96 will always be in the same locations these are useful for reference pionts in aligning the preform in the blow mold.

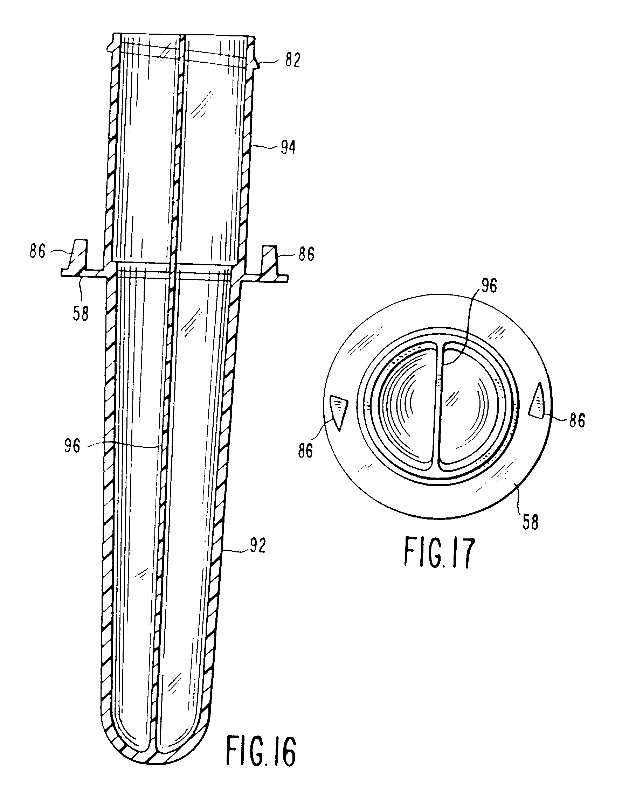

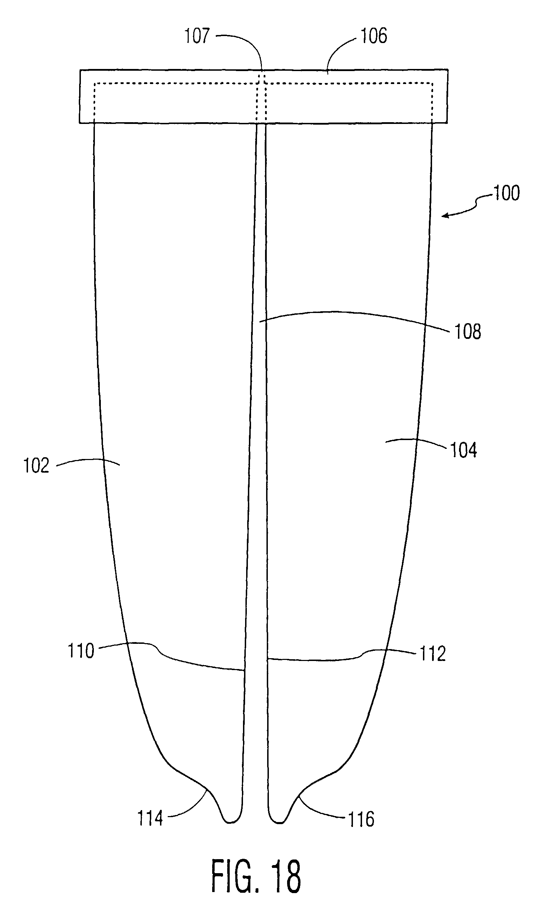

Figure 16 is a horizontal section of the preform of Figure 15. Figure 17 is a top plan view of the preform.

Figure 18 shows the core mold for making the preform. The core mold 100 is comprised of three parts. These are core base 106 and core projections 102 and 104. The center void space 108 will produce the inner wall of the preform. In a preferred embodiment surfaces 110 and 112 are recessed at the lower end to produce recesses 114 and 116.

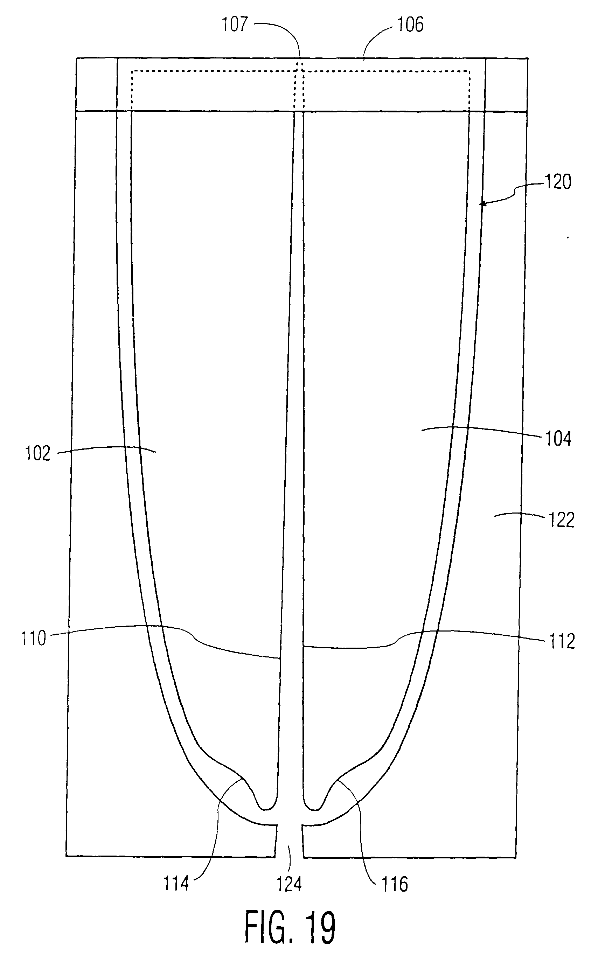

Figure 19 shows core mold 100 in the injection mold 120. This consists of mold body 122 and mold gate 124. A gate pad covers part of gate 124 and regulates the flow of plastic during injection molding. Injection mold 120 is vented at 107 at the top of inner wall 96.

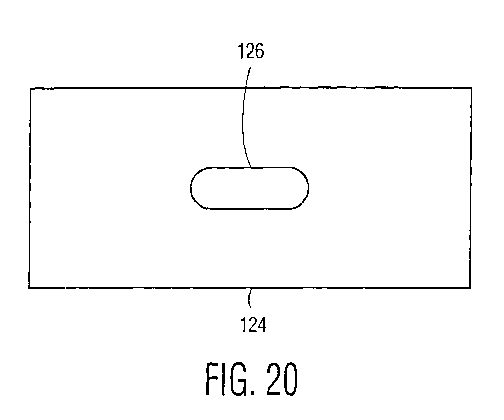

Figure 20 shows gate pad 124 with an elongated aperture 126. The objective in Figure 20 is to use a gate pad which will allow for the flow of plastic to control the deflection of the core projections during injection molding. It also is an objective to control any movement of core projections 122 and 124 and thus produce a uniform preform. This control can also be achieved through the use of recesses 114 and 116 and a gate pad with a circular aperture. This control is increased by the use of recesses 114 and 116 in combination with an elongated aperture. A preform that is out of specification will produce a bottle that is out of specification.

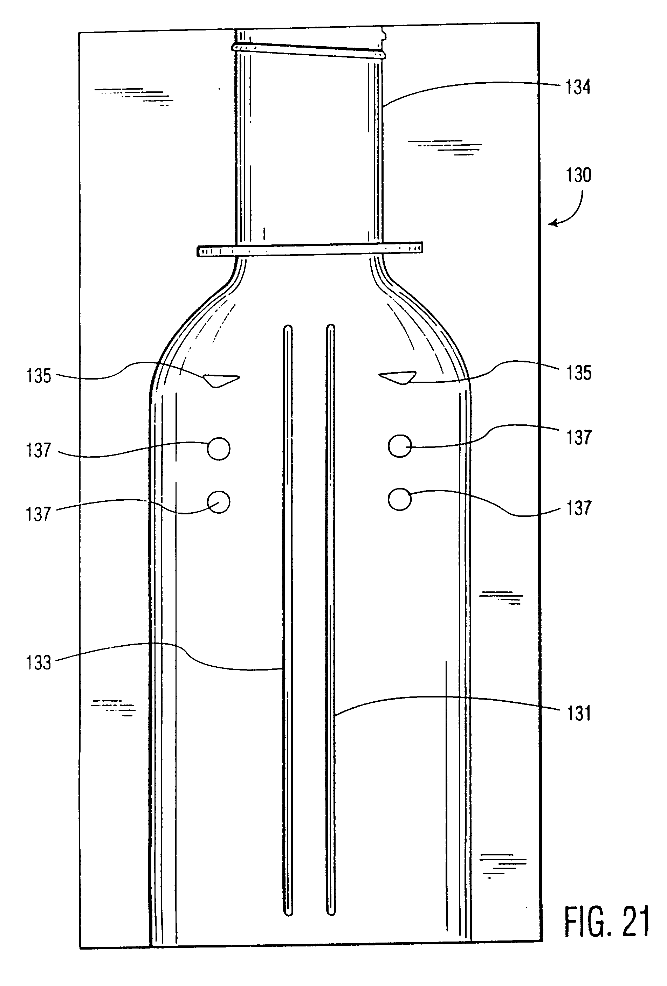

Figure 21 shows a half section 132 of a blow mold 130 with various recesses 131 and 135 or protrusions 133 and 137. Section 134 forms the dispenser/doser of the container. These features will result in the opposite effect in the blown bottle. The objective of these recesses and projections is to promote a vertical flow of plastic along the blow mold wall during the blow mold process. If the plastic does not flow vertically, but at an angle, there can result a spiraling of the inner wall 106 of the preform as the bottle is being formed.

The preform is formed by injection molding by heating the plastic so that it flows and applying a melt pressure of about 2,000 to 20,000 psi (1 psi ≈ 0,068 bar). The useful plastics include polypropylene, polyvinyl chloride, acrylonitrile - styrene or their copolymers, polyethylene terephthalate or copolymers or terpolymers thereof, polyethylene naphthalate and polybutylene terephthalate. After being formed the preform is placed in a blow mold and with an internal air pressure of about 100 to 1000 psi in a blow mold and with an internal air pressure of about 100 to 1000 psi is blown to the shape of the mold. Preferably the pressure is about 600 psi.

The foregoing description describes the preferred and best mode for practicing the present invention.

An option with regard to the dip tubes is to mold the dip tubes onto the bottle inner wall as the bottle is made and solely then to insert a seal fitment between the dispenser/doser portion. This reduces the number of parts.

A further option is to use a telescoping stretch rod technique in blow molding the containers. A telescoping stretch technique provides advantages in the distribution of the air during blowing. This can produce a container with a more uniform web.

## Claims

1. A plastic blow molded multi-chamber container, said container having sidewalls (12;12';52), a base (14;14';54) at one end of said sidewalls (14;14';54) with a dispensing means at the other end of said sidewalls (14;14';54) anda plurality of separate chambers (32,34;32',34';72,74) within said container, each chamber (32,34;32',34';72,74) being separate from the base (14,14';54) through to a container aperture at said other end, continuous webs (30;30';62) within said container extending from said base (14;14';54) to said aperture and separating said container into said plurality of separate chambers (32,34;32',34';72,74) the base comprising an indentation and footed portions,
characterized in that said base has a generally outward convex bottom wall and that said indentation forms an axial inwardly arched lineal impression in said base (14;14';54), the inner surface of said base (14;14';54) in the region of the lineal impression (40;40',40") forming a continuously curved juncture with the bottom-most edge of the webs (30;30';62) and outwardly extending footed portions (46,48;46',48',50,52) from said base (14;14';54) providing impact support for the container.

2. A plastic blow molded multi-chamber container as in claim 1 wherein said dispensing means is an integral part of said container and is comprised of an upwardly extending dispensing means sidewall (18;18';80) extending from said container sidewall (12;12';52) to an exit to form a dispensing chamber, said dispensing chamber having crosssectional area less than that of said container, said continuous webs (30;30';62) extending as a singular unit to an exit of said dispensing chamber to divide said dispensing chamber into a plurality of separate chambers (71,73).

3. A plastic blow molded multi-chamber container as in claim 2 wherein within said dispensing means there is at least one dip tube (54,56) sealably supported in the dispensing means between the dispensing means sidewall (18;18';80) and said webs (30;30';62), said dip tube (54,56) extending into said container to adjacent the base (14;14';54) of said container, the product to be dispensed flowing up said dip tube (54,56) upon compression of the container sidewalls (12;12';52) and being maintained separated by said web (30;30';62) within said dispensing means until flowed therefrom.

4. A plastic blow molded multi-chamber container as in claim 2 wherein said container has an elliptical cross-section.

5. A plastic blow molded multi-chamber container as in claim 2 wherein said web (30;30';62) has the least thickness at a center region thereof.

6. A plastic blow molded multi-chamber container as in claim 1 wherein said outwardly extending footed portions (46,48;46',48',50,52) are disposed on opposite sides of the lineal impression (40;40',40") formed in said base (14;14';54).

7. A plastic blow molded multi-chamber container as in claim 1 wherein said outwardly extending footed portions (46,48;46',48',50,52) include at least one footed portion (46,48;46',48',50,52) on opposite sides of the lineal impression (40;40',40").

8. A plastic blow molded multi-chamber container as in claim 1 including a second axial inwardly arched lineal impression (40") in said base (14') at an angle to said first axial inwardly arched lineal impression (40').

9. A plastic blow molded multi-chamber container as in claim 8 wherein at least four outwardly extending footed portions (46',48',50,52) are formed.

10. A plastic blow molded multi-chamber container as in claim 2 including a closure (60) that is threadedly attached to said dispensing means, said closure (60) having a seal to contact the exit of said dispensing chamber, said seal being rotatable with respect to said closure.

## Patentansprüche

1. Geblasener Kunststoff-Mehrkammerbehälter, wobei der Behälter Seitenwände (12; 12'; 52), eine Basis (14; 14'; 54) an einem Ende der Seitenwände (14; 14'; 54) mit einer Spendereinrichtung am anderen Ende der Seitenwände (14; 14'; 54) und eine Mehrzahl von getrennten Kammern (32, 34; 32', 34'; 72, 74) innerhalb des Behälters aufweist, wobei jede Kammer (32, 34; 32', 34'; 72, 74) von der Basis ( 14, 14'; 54) durchgehend bis zu einer Behälteröffnung an dem anderen Ende abgetrennt ist, wobei kontinuierliche Bahnen (30; 30'; 62) sich innerhalb des Behälters von der Basis (14, 14'; 54) zu der Öffnung erstrecken und den Behälter in die Mehrzahl von getrennten Kammern (32, 34; 32', 34'; 72, 74) trennen, wobei die Basis eine Vertiefung und Fußbereiche aufweist,
dadurch gekennzeichnet, dass die Basis eine im Allgemeinen außen konvexe Bodenwand hat und dass die Vertiefung einen axial nach innen gebogenen, geradlinigen Eindruck in der Basis (14; 14'; 54) bildet, wobei die innere Oberfläche der Basis (14; 14'; 54) im Bereich des geradlinigen Eindrucks (40; 40'; 40") eine kontinuierlich gekrümmte Verbindung mit der Unterkante der Bahnen (30; 30'; 62) bildet und wobei von der Basis (14; 14'; 54) nach außen verlaufende Fußbereiche (46, 48; 46', 48', 50, 52) Stoßabfänger für den Behälter bilden.

2. Geblasener Kunststoff-Mehrkammerbehälter nach Anspruch 1, wobei die Spendereinrichtung ein einstückiges Teil mit dem Behälter ist und eine nach oben verlaufende Spendereinrichtungseitenwand (18; 18'; 80) aufweist, die von der Behälterseitenwand (12; 12'; 52) zu einem Ausgang verläuft, um eine Spenderkammer zu bilden, wobei die Spenderkammer eine kleinere Querschnittsfläche als der Behälter hat, wobei die kontinuierlichen Bahnen ( 30; 30'; 62) sich als einzelne Einheit zu einem Ausgang der Spenderkammer erstrecken, um die Spenderkammer in eine Mehrzahl von getrennten Kammern (71, 73) zu unterteilen.

3. Geblasener Kunststoff-Mehrkammerbehälter nach Anspruch 2, wobei in der Spendereinrichtung wenigstens eine Tauchröhre (54, 56) abgedichtet in der Spendereinrichtung zwischen der Spendereinrichtungseitenwand (18; 18'; 80) und den Bahnen (30; 30'; 62) gehalten ist, wobei die Tauchröhre (54, 56) in den Container hinein bis angrenzend an die Basis (14; 14'; 54) des Behälters verläuft, wobei das auszugebende Produkt beim Zusammendrücken der Behälterseitenwände (12; 12'; 52) durch die Tauchröhre (54, 56) nach oben fließt und von der Bahn (30; 30'; 62) innerhalb der Spendereinrichtung getrennt gehalten wird bis es daraus herausfließt.

4. Geblasener Kunststoff-Mehrkammerbehälter nach Anspruch 2, wobei der Behälter einen elliptischen Querschnitt hat.

5. Geblasener Kunststoff-Mehrkammerbehälter nach Anspruch 2, wobei die Bahn (30; 30'; 62) in einem mittleren Bereich ihre geringste Dicke hat.

6. Geblasener Kunststoff-Mehrkammerbehälter nach Anspruch 1, wobei die nach außen verlaufenden Fußbereiche (46, 48; 46', 48', 50, 52) an gegenüberliegenden Seiten des in der Basis (14; 14'; 54) gebildeten Eindrucks (40; 40', 40") angeordnet sind.

7. Geblasener Kunststoff-Mehrkammerbehälter nach Anspruch 1, wobei die außen verlaufenden Fußbereiche (46, 48; 46', 48', 50, 52) wenigstens einen Fußbereich (46, 48; 46', 48', 50, 52) an gegenüberliegenden Seiten des geradlinigen Eindrucks (40; 40', 40") umfassen.

8. Geblasener Kunststoff-Mehrkammerbehälter nach Anspruch 1, wobei der Behälter einen zweiten axial nach innen gebogenen, geradlinigen Eindruck (40") in der Basis (14') aufweist, der unter einem Winkel zu dem ersten axial nach innen gebogenen, geradlinigen Eindruck (40') liegt.

9. Geblasener Kunststoff-Mehrkammerbehälter nach Anspruch 8, wobei wenigstens vier nach außen verlaufende Fußbereiche (46', 48', 50, 52) gebildet sind.

10. Geblasener Kunststoff-Mehrkammerbehälter nach Anspruch 2, wobei der Behälter einen Verschluss (60) hat, der über ein Gewinde an der Spendereinrichtung befestigt ist, wobei der Verschluss (60) eine Dichtung hat, um am Ausgang der Spenderkammer anzuliegen, wobei die Dichtung in Bezug auf den Verschluss drehbar ist.

## Revendications

1. Récipient multi-compartiments en matière synthétique moulé par soufflage, ledit récipient ayant des parois latérales (12;12';52), une base (14 ;14' ;54) à une extrémité desdites parois latérales (14 ;14' ;54), avec un moyen de distribution à l'autre extrémité desdites parois latérales (14 ;14' ;54) et plusieurs compartiments séparés (32,34 ;32',34' ;72,74) à l'intérieur dudit récipient, chaque compartiment (32,34 ;32',34' ;72,74) étant séparé depuis la base (14 ;14' ;54) jusqu'à une ouverture du récipient à ladite autre extrémité, des feuilles continues (30 ;30' ;62) à l'intérieur dudit récipient s'étendant depuis ladite base (14 ;14' ;54) jusqu'à ladite ouverture et séparant ledit récipient en lesdits plusieurs compartiments séparés (32,34 ;32',34' ;72,74), la base comportant un enfoncement et des parties formant pied,
caractérisé en ce que ladite base a une paroi de fond de forme générale convexe vers l'extérieur et en ce que ledit enfoncement forme une empreinte axiale en ligne incurvée vers l'intérieur dans ladite base (14 ;14' ;54), la surface interne de ladite base (14 ;14' ;54) dans la région de l'empreinte en ligne (40 ;40' ;40") constituant une jonction incurvée continûment avec le bord le plus au fond des feuilles (30 ;30' ;62) et des parties formant pied s'étendant vers l'extérieur (46,48 ;46',48',50,52) depuis ladite base (14 ;14' ;54) constituant un support d'appui pour le récipient.

2. Récipient multi-compartiments en matière synthétique moulé par soufflage selon la revendication 1 dans lequel ledit moyen de distribution est une partie en une seule pièce dudit récipient et comprend une paroi latérale (18 ;18' ;80) de moyen de distribution s'étendant vers le haut depuis ladite paroi latérale (12 ;12' ;52) dudit récipient vers une sortie pour former un compartiment de distribution, ledit compartiment de distribution ayant en section une surface moindre que celle dudit récipient, lesdites feuilles continues (30 ;30' ;62) s'étendant en tant que composant individuel vers une sortie dudit compartiment de distribution pour diviser ledit compartiment de distribution en plusieurs compartiments séparés (71, 73).

3. Récipient multi-compartiments en matière synthétique moulé par soufflage selon la revendication 2 dans lequel à l'intérieur dudit moyen de distribution, il existe au moins un tube plongeur (54, 56) supporté de manière étanche dans le moyen de distribution entre les parois latérales du moyen de distribution (18 ;18' ;80) et lesdites feuilles (30 ;30' ;62), ledit tube plongeur (54, 56) s'étendant dans ledit récipient de manière à avoisiner la base (14 ;14' ;54) dudit récipient, le produit à distribuer s'écoulant à travers ledit tube plongeur (54, 56) lors d'une compression des parois latérales (12 ;12' ;52) du récipient et étant maintenu séparé par ladite feuille (30 ;30' ;62) à l'intérieur dudit moyen de distribution jusqu'à ce qu'il se soit écoulé de celui-ci.

4. Récipient multi-compartiments en matière synthétique moulé par soufflage selon la revendication 2 dans lequel ledit récipient a une section elliptique.

5. Récipient multi-compartiments en matière synthétique moulé par soufflage selon la revendication 2 dans lequel ladite feuille (30 ;30';62) a son épaisseur la plus faible dans une région centrale.

6. Récipient multi-compartiments en matière synthétique moulé par soufflage selon la revendication 1 dans lequel lesdites parties formant pied s'étendant vers l'extérieur (46,48 ;46',48',50,52) sont disposées à des côtés opposés de l'empreinte en ligne (40 ;40' ;40") formée dans ladite base (14 ;14' ;54).

7. Récipient multi-compartiments en matière synthétique moulé par soufflage selon la revendication 1 dans lequel lesdites parties formant pied s'étendant vers l'extérieur (46,48 ;46',48',50,52) comprennent au moins une partie formant pied (46,48 ;46',48',50,52) à des côtés opposés de l'empreinte en ligne (40 ;40' ;40").

8. Récipient multi-compartiments en matière synthétique moulé par soufflage selon la revendication 1 comprenant une seconde empreinte (40") axiale en ligne incurvée vers l'intérieur dans ladite base (14') faisant un angle avec ladite première empreinte (40') axiale en ligne incurvée vers l'intérieur.

9. Récipient multi-compartiments en matière synthétique moulé par soufflage selon la revendication 8 dans lequel sont constituées au moins quatre parties formant pied (46', 48', 50, 52) s'étendant vers l'extérieur.

10. Récipient multi-compartiments en matière synthétique moulé par soufflage selon la revendication 2 comportant un élément de fermeture (60) qui est solidarisé par vissage audit moyen de distribution, ledit élément de fermeture (60) ayant un joint d'étanchéité adapté pour venir en appui avec la sortie dudit compartiment de distribution, ledit joint d'étanchéité étant prévu pour pouvoir tourner par rapport audit élément de fermeture.
